# EUROPEAN PATENT SPECIFICATION

(11) **EP 1 227 916 B1**
(45) Date of publication and mention of the grant of the patent: **29.10.2003**
(21) Application number: 00946610.3
(22) Date of filing: 20.06.2000
(51) Int. Cl.: B25J 19/00

(54) **DEVICE AND METHOD FOR FASTENING CABLES TO AN INDUSTRIAL ROBOT**
VORRICHTUNG UND VERFAHREN ZUR BEFESTIGUNG VON KABELN AN EINEM INDUSTRIEROBOTER
DISPOSITIF ET PROCEDE D'ATTACHE DE CABLES SUR UN ROBOT INDUSTRIEL

(30) Priority: 24.06.1999 SE 9902409
(43) Date of publication of application: 07.08.2002
(73) Proprietor: ABB AB, 721 83 Västeras (SE)
(72) Inventor: SALOMONSSON, Dan, S-722 19 Väster s (SE); LUNDBÄCK, Daniel, S-722 22 Väster s (SE)
(74) Representative: Dahlstrand, Björn
(86) International application number: SE0001304
(87) International publication number: WO01000372

(56) References cited:
- WO-A1-00/25992
- DE-U1- 29 913 754
- US-A- 4 780 045
- US-A- 5 225 648
- US-A- 5 421 218
- US-A- 5 732 599

## Description

### Technical field

The present invention relates to an industrial robot with compacted cable set fastening.

### Background art

Industrial robots comprise a manipulator with a control system where the manipulator comprises a robot arm. In industrial robots the power cable set is usually arranged inside the robot arm for power supply to the tool itself, inside the robot arm. It is also known to arrange process cable sets for power supply to the tool itself, inside the robot arm. The qualifying term cable set here refers to one or multiple cable sets mentioned above. Furthermore the qualifying term can comprise spare circuits, for example to meet the different demands of clients. Each cable set is provided with connectors for connection to respective power source.

US 5 732 599 A describes a cap member which fits inside the entire edge area of a through hole and serves to support a (simple) cable.

The patent document US 5564312 shows an industrial robot in which the cable set coming up from the frame passes an opening in a star shaped holder, which keeps the cables apart to manage the rotation of the robot around an axle A. The star shaped holder also protects against down-falling particles and parts. The star shaped holder distributes the individual cables and wires over the entire opening.

The patent document GB 2134074 shows an industrial robot with an installed cable set, the purpose of which is to decrease the wear on the cable set without compromising the mobility of the robot. The document does not mention on how the cable set is to be replaced e.g. in case of cable breakdown or other damage to the cable set.

The patent document US4715571 shows a device for holding individual cables in round holders 1. The device also comprises fastening means 53, which can each hold a number of holders. The purpose is among other things to achieve a holding device of low weight to be used e.g. in aeroplanes.

Industrial robots are thus equipped with cable sets, which are drawn out and in through comparatively narrow spaces in the manipulator pieces. Problems arise when an old cable set is to be removed and a new cable set is to be installed. When removing a cable set, the individual cables/wires in the set can get entangled with remaining cables/wires and pull them out or tear them apart. Or the new cable set gets stuck and risks being torn apart. Both situations lead to an undesired assembly work on the robot with expensive delays as a result thereof.

The ready-manufactured cable sets have relatively large connectors. Some of the connectors cannot pass through one or several openings because the available space in the openings is too small. The alternative is to partly dismantle the robot in order to install cable sets, which makes the operation of the robot more expensive.

With the problems mentioned above the time between the changing of cable sets is substantially lengthened. This leads to expensive stoppage, which makes the operation of the robot, and thereby also the manufacturing of a product, substantially more expensive.

Another kind of problem with robots is that dirt and waste material can penetrate to the interior of the manipulator through openings for the cable sets. This could also lead to unwanted stoppage, which makes the production more expensive. Furthermore, dirt inside the robot leads to greater wear and thereby shorter lifetime.

When manufacturing robots like the ones mentioned above a need for a robot arises, which enables a fast and simple fastening of ready-made cable sets with attached connectors. At the same time, dirt should be kept out from the interior of the robot. With some robot mountings there is also a need for a fastening, which also protects the interior of the robot from liquid penetrating through. The device for fastening cable sets should be of low weight, use the space with maximal efficiency, i.e. offer a compact fastening, allow for a quick assembly of cable sets and at the same time keep waste material and dirt out.

This requirement cannot be met by any of the devices shown in the cited documents.

### Summary of the disclosed invention

When industrial robots are manufactured a manipulator is equipped with cable sets for operating the robot. The development of the power supply has the objective to create flexible systems both for robot manufacturers and for customers. In a flexible system the robot manufacturer can produce a standard concept. The customer thereafter decides how the robot shall be equipped at delivery.

The object of the present invention is thus to achieve a robot comprising a device with which one in a simple and compact way fastens cable sets and at the same time enables the exchanging and supplementing of ready-made cable sets.

The inventive idea includes that the robot manufacturer can use cable sets ready-made by a subcontractor. Furthermore it includes that the user/customer himself also shall be able to supplement alternatively shift the operational equipment of the robot to make the robot usable for totally different assignments during its lifetime.

The solution according to the invention is a robot according to the features of claim 1. The device of claim 1 comprises a holder, which can fasten the individual cables longitudinally and laterally. The device can also comprise a lid with a shape compatible to the holder. When the holder and the lid are mounted together in/across the opening they cover, alternatively form, a tight seal. The holder and the lid respectively are detachably fixed along the corresponding section of the edge region of the opening.

A further aspect of the invention is described by the features of the process according to claim 11.

The inventive idea includes the situation where a manipulator has so many cable sets, that the corresponding number of compatible holders together cover the opening. Additionally it includes the situation where one or several holders are arranged together without covering the opening and without arranging any lid arranged in the residual part of the opening.

To simplify the fastening of cable sets in the manipulator, the manipulator is provided with a pipe socket, which has an upper orifice of optional shape. Thereby an irregular opening in the manipulator can be transferred to an optional orifice shape, which fits the ready-made holders of the cable sets with pre-selected shape. Another advantage of a fixedly mounted pipe socket is that the cable set passes an opening, where the risk of wear and breaking against the rim of the opening has been substantially reduced.

The holder and the lid can be manufactured from different materials, e.g. rubber, polymer or metal.

The invention allows the fixating of existing cable sets in an opening in a robot so that they do not accompany a ready-made cable set being removed/installed and thereby being drawn through the opening. The holder fixes installed cable sets e.g. in connection with the rim of the opening. If the cable set installed, which is to be drawn through the opening, has connectors that are too large, the holder can be detached from the rim of the opening and be led to the side in order to leave room for the connectors. Then, only the separate cables in the cable set occupy space in the opening. When the connectors have passed through the opening, the holder is brought back and once again attached e.g. to the rim of the opening.

### Brief description of the drawings

Henceforth reference is made to the attached figures for a better understanding of embodiments of the present invention, wherein:
Fig. 1 illustrates an industrial robot with a cable set installed in accordance with the present invention.
Fig. 2 illustrates one embodiment of the invention, where a pipe socket forms an opening with holder and lid.
Fig. 3 illustrates an enhanced detailed view of the device in fig. 2.

### Detailed description of preferred embodiments

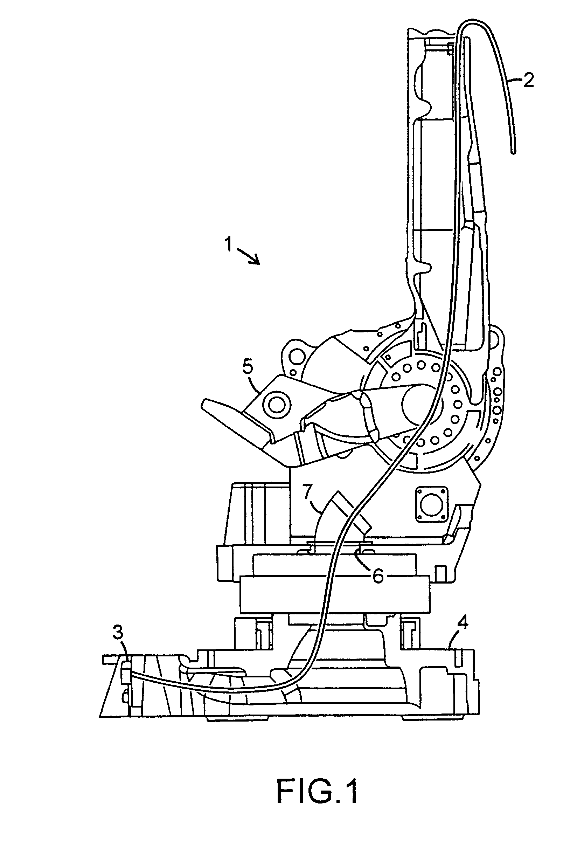

An industrial robot, comprising a manipulator with a control system, comprises a device 1 allowing attachment of a cable set 2 (fig. 1). The cable set 2 is installed from a power source 3 up through the manipulator support 4 and further to the manipulator arm 5. The cable set 2 runs through the support 4 via an opening 6. In the preferred embodiment, a fixedly mounted pipe socket 7 with an upper rim 7a and an upper orifice 7b covers the opening 6 in the support 4. The cable set 2 thus runs through the opening 6 and the pipe socket 7 and out through the orifice 7b.

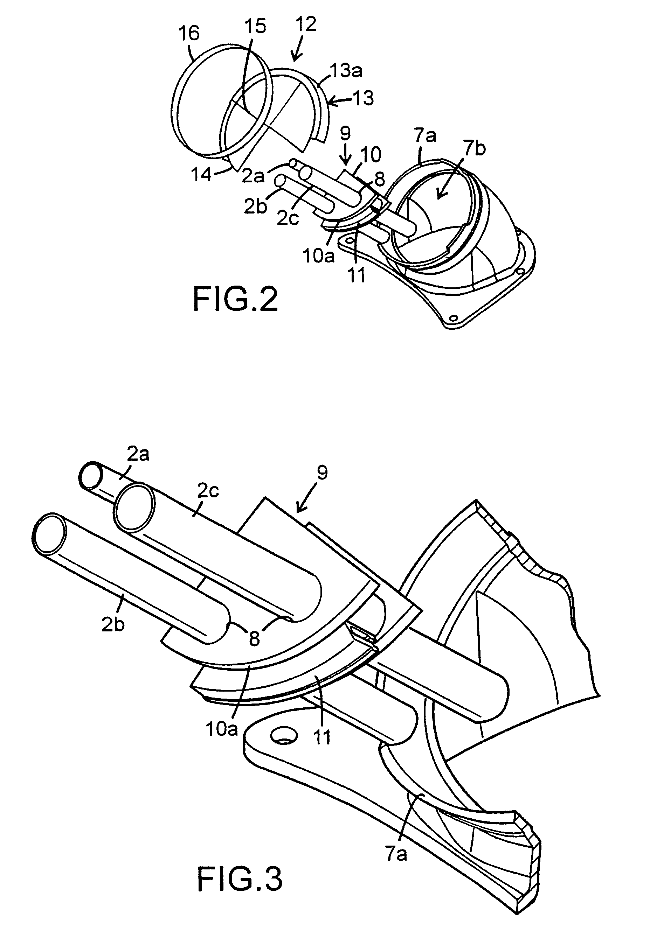

The cable set 2 in the example consists of three individual cables/wires 2a, 2b and 2c (fig. 2). The cables/wires run through cavities/openings 8 in a disc-shaped holder 9 and are thereby fixedly positioned at a distance from each other in a plane transverse to their longitudinal direction. The holder 9 is, along a section 10a of its outer edge 10, shaped to be compatible with the upper rim 7a of the pipe socket. In the shown example, the upper rim 7a of the pipe socket is circular in shape and the holder 9 therefore has a correspondingly arch-shaped edge section 10a, which has the same radius of curvature as the upper rim 7a of the pipe socket. Along the edge of the holder's arch-shaped section 10a, a means of attachment is arranged in the form of a longitudinal curved collar 11. The holder 9 is attached to the orifice 7b of the pipe socket 7 by the collar 11 being hitched or forced onto the upper rim 7a of the pipe socket and the fixation is ensured with snap action.

The cable fastening means can also comprise a lid 12 with the same shape/outer contour as the upper rim 7a of the pipe socket. In analogy with the holder 9 the lid 12 has an attachment means 13 along the outer edge 14 in the form of a longitudinal arch-shaped collar 13a, where the collar 13a is hitched or forced onto the upper rim 7a of the pipe socket and the fixation is ensured with snap action. The lid 12 is used firstly to seal the upper rim 7a of the pipe socket before a cable set is installed in the robot and secondly, when a cable set 2 is already installed, to cover the part of the orifice 7b which is not yet covered by a holder 9.

The lid 12 can at the beginning have a shape, which covers the orifice 7b. By providing the lid 12 with one or more directions 15, the lid 12 can be divided into sections as more cable sets are installed. The lid 12 is divided into sections by removing/breaking off pieces along the directions 15, making the shape of the lid 12 compatible with the holder or holders 9 fastened to the opening. The holder 9 and the lid 12 are, when arranged next to each other, shaped to form a tight overlapping.

### Alternative embodiments

Instead of hitching or forcing the holder onto the rim 7a of the pipe through the snap action of the collar 11, the collar 11 of the holder 9 can be hitched or forced onto the rim and thereafter fastened with a hose clamp 16 or the like. The same applies to the fastening of an optional lid 12.

The holder 9 can be of circular shape but have a spreading in the longitudinal direction of the cable set. In this way, the holder 9 giving the cable set 2 longitudinal support can make the guiding of the cable set steadier.

As long as the cable set is compactly arranged in the holder 9, it can be of optional shape. In the case of more holders, theses should be of compatible shape. In the case of there being a lid 12, it can be shaped to cover all or part of the orifice 7b.

The outer edges of both the holder 9 and the lid 12 can be shaped to overlap when being arranged next to each other. They can also form a tight overlapping.

The individual cables can be arranged to revolve in the recesses/openings 8 of the holder.

The holder/holders alternatively can be arranged to revolve in the opening/orifice 7b.

The upper orifice 7b of the pipe socket 7 need not be of circular shape, but can be of either oval or angular shape.

The pipe socket 7 need not be curved but can be straight.

The fastening devices 11 and 13 neither need to be of the same shape nor be collars. The main point is that respective fastening device is easily detachable.

The lid can consist of several uniform or non-uniform but compatible units, which together form a lid of desired size and shape. They must also be compatible to one or several holders if they are to cover the opening together.

## Claims

1. An industrial robot comprising a manipulator with a control system and at least one cable set (2), whereby the manipulator comprises at least one device (1) for fastening the at least one cable set (2), the cable set (2) being arranged to run through at least one opening (6) in the manipulator, the device comprising a holder (9), through which the cable set (2) runs, the holder (9) being detachably fixed along only a section of an edge area of the opening (6).

2. A robot according to claim 1, **characterized by** the opening (6) being formed by a pipe socket (7), fixedly mounted on the manipulator (1).

3. A robot according to claim 1, **characterized by** the detachably fixed holder (9) having a fastening means in the form of a curved collar (11).

4. A robot according to claim 3, **characterized by** the holder (9) being fixed by snap action with the curved collar (11).

5. A robot according to claim 3, **characterized by** the holder (9) being fixed with a hose clamp (16).

6. A robot according to claim 1, **characterized by** the device (1) comprising a lid (12), which is detachably fixed in connection with the edge region of the opening (6).

7. A robot according to claim 1, **characterized by** the holder/holders (9) and lid/lids (12) having compatible shapes and by that they mounted together cover at least part of the opening (6).

8. A robot according to claim 1, **characterized by** the holder/holders (9) and lid (12) together covering and forming a tight seal of the opening (6).

9. A robot according to claim 6, **characterized by** the lid (12) being divided into sections (12a).

10. A robot according to claim 1, **characterized by** the lid (12) being divided into sections (12a) through at least one direction (15).

11. A process for fastening in an industrial robot, comprising a manipulator provided with a control system and at least one cable set (2), which runs through at least one opening (6) in the manipulator, the cable set (2) being arranged to run through a holder (9), and wherein the holder (9) is rendered detachably fixed in connection with only a section of an edge area of the opening (6).

12. A process according to claim 11, **characterized by** that a lid (12) is shaped to be compatible with one or several holders (9), that holder (9) and lid (12) are fixed in the opening (6) in order to together be brought to cover at least part of the opening (6).

13. A process according to claim 12, **characterized by** that holder (9) and lid (12) together are rendered to cover the opening (6) tight-fittingly.

## Patentansprüche

1. Industrieroboter, der einen Manipulator mit einem Steuersystem und wenigstens einen Kabelsatz (2) enthält, wobei der Manipulator wenigstens eine Vorrichtung (1) zur Befestigung des wenigstens einen Kabelsatzes (2) enthält, wobei der Kabelsatz (2) angeordnet ist, um durch wenigstens eine Öffnung (6) in dem Manipulator zu laufen, wobei die Vorrichtung einen Halter (9) enthält, durch den der Kabelsatz (2) läuft, wobei der Halter (9) entlang nur eines Abschnitts eines Randbereichs der Öffnung (6) abnehmbar befestigt ist.

2. Roboter gemäß Anspruch 1, **gekennzeichnet durch** die Öffnung (6), die **durch** eine Rohrmuffe (7) gebildet wird, die an dem Manipulator fest angebracht ist.

3. Roboter gemäß Anspruch 1, **gekennzeichnet durch** den abnehmbar befestigen Halter (9), der ein Befestigungsmittel in der Form eines gebogenen Rings (11) aufweist.

4. Roboter gemäß Anspruch 3, **gekennzeichnet durch** den Halter (9), der **durch** Schnappwirkung mit dem gebogenen Ring (11) befestigt ist.

5. Roboter gemäß Anspruch 3, **gekennzeichnet durch** den Halter (9), der mit einer Schlauchschelle (16) befestigt ist.

6. Roboter gemäß Anspruch 1, **gekennzeichnet durch** die Vorrichtung (1), die einen Deckel (12) enthält, der in Verbindung mit dem Randbereich der Öffnung (6) abnehmbar befestigt ist.

7. Roboter gemäß Anspruch 1, **gekennzeichnet durch** den/die Halter (9) und den/die Deckel (12), die kompatible Formen aufweisen und **dadurch**, dass sie zusammen montiert wenigstens einen Teil der Öffnung (6) abdecken.

8. Roboter gemäß Anspruch 1, **gekennzeichnet durch** den/die Halter (9) und Deckel (12), die zusammen überlappen und einen dichten Verschluss der Öffnung (6) bilden.

9. Roboter gemäß Anspruch 6, **gekennzeichnet durch** den Deckel (12), der in Abschnitte (12a) eingeteilt ist.

10. Roboter gemäß Anspruch 1, **gekennzeichnet durch** den Deckel (12), der in Abschnitte (12a) **durch** wenigstens eine Führung (15) eingeteilt ist.

11. Verfahren zur Befestigung in einem Industrieroboter, der einen Manipulator, der mit einem Steuersystem bereitgestellt ist, und wenigstens einen Kabelsatz (2) enthält, der durch wenigstens eine Öffnung (6) in dem Manipulator läuft, wobei der Kabelsatz (2) angeordnet wird, um durch einen Halter (9) zu laufen, und wobei der Halter (9) in Verbindung mit nur einem Abschnitt eines Randbereichs der Öffnung (6) abnehmbar befestigt gemacht wird.

12. Verfahren gemäß Anspruch 11, **dadurch gekennzeichnet, dass** ein Deckel (12) geformt wird, um mit einem oder mehreren Haltern (9) kompatibel zu sein, dass Halter (9) und Deckel (12) in der Öffnung (6) befestigt werden, um zusammen zur Abdeckung wenigstens einen Teils der Öffnung (6) gebracht zu werden.

13. Verfahren gemäß Anspruch 12, **dadurch gekennzeichnet, dass** Halter (9) und Deckel (12) zusammen zur eng anliegenden bzw. dichten Abdeckung der Öffnung (6) gebracht werden.

## Revendications

1. Robot industriel comprenant un manipulateur ayant un système de commande et au moins un jeu (2) de câble, le manipulateur comprenant au moins un dispositif pour fixer le au moins un jeu (2) de câble, le jeu (2) de câble étant agencé pour passer dans au moins une ouverture (6) du manipulateur,
le dispositif comprenant un support (9) dans lequel passe le jeu (2) de câble, le support (9) étant fixé de manière amovible le long de seulement une section d'une zone de bord de l'ouverture (6).

2. Robot suivant la revendication 1, **caractérisé en ce que** l'ouverture (6) est formée par une tubulure (7) montée fixe sur le manipulateur (1).

3. Robot suivant la revendication 1, **caractérisé en ce que** le support (9) est fixé de manière amovible à un moyen de fixation sous la forme d'un collier (11) courbé.

4. Robot suivant la revendication 3, **caractérisé en ce que** le support (9) est fixé par un effet d'encliquetage au collier (11) courbé.

5. Robot suivant la revendication 3, **caractérisé en ce que** le support (9) est fixé par un collier (16) de serrage à griffe.

6. Robot suivant la revendication 1, **caractérisé en ce que** le dispositif (1) comprend un couvercle (12) qui est fixé de manière amovible en liaison avec la partie de bord de l'ouverture (6).

7. Robot suivant la revendication 1, **caractérisé en ce que** le support/les supports (9) et le couvercle/les couvercles (12) ont des formes compatibles et **en ce que**, montés ensemble, ils recouvrent au moins une partie de l'ouverture (6).

8. Robot suivant la revendication 1, **caractérisé en ce que** le support/les supports (9) et le couvercle (12) recouvrent et forment ensemble un joint étanche de l'ouverture (6).

9. Robot suivant la revendication 6, **caractérisé en ce que** le couvercle (12) est subdivisé en sections (12a).

10. Robot suivant la revendication 1, **caractérisé en ce que** le couvercle (12) est subdivisé en sections (12a) dans au moins une direction (15).

11. Procédé de fixation dans un robot industriel, comprenant un manipulateur muni d'un système de commande et d'au moins un jeu (2) de câble qui passe dans au moins une ouverture (6) du manipulateur, le jeu (2) de câble étant disposé de manière à passer dans un support (9), le support (9) étant fixé de manière amovible en liaison avec seulement une section d'une zone de bord de l'ouverture (6).

12. Procédé suivant la revendication 11, **caractérisé en ce qu'**un couvercle est conformé de manière à être compatible avec un support ou avec plusieurs supports (9), le support (9) et le couvercle (12) étant fixés dans l'ouverture afin d'être mis ensemble pour recouvrir au moins une partie de l'ouverture (6).

13. Procédé suivant la revendication 12, **caractérisé en ce que** le support (9) et le couvercle (12) recouvrent ensemble l'ouverture (6) d'une manière étanche.
